# EUROPEAN PATENT SPECIFICATION

(11) **EP 2 378 152 B1**
(45) Date of publication and mention of the grant of the patent: **23.01.2013**
(21) Application number: 11154178.5
(22) Date of filing: 11.02.2011
(51) Int. Cl.: F16D 65/097

(54) **Heat-insulating component for brake assembly**
Wärmeisolierungskomponente für eine Bremsvorrichtung
Composant à isolation thermique pour ensemble de frein

(30) Priority: 04.11.2010 IT MI20102050
(43) Date of publication of application: 19.10.2011
(73) Proprietor: Kematis Projects Limited, London EC3V 0EH (GB)
(72) Inventor: Fracasso, Alvise, 30123, Venezia (IT)
(74) Representative: Gervasi, Gemma

(56) References cited:
- EP-A2- 0 642 920
- WO-A1-2009/040660

## Description

### FIELD OF THE INVENTION

The present invention concerns heat-insulating components in brake assembly for auto vehicles, motor vehicles and similar. More in detail, the present invention concerns heat-insulating plates applied to a hydraulically or electro-hydraulically operated brake assembly, to which the description that follows makes explicit reference, but without any loss in generality.

### BACKGROUND OF THE INVENTION

As it is known, all the auto-vehicles motor vehicles and similar currently in circulation are equipped with hydraulically or electro-hydraulically operated brake assemblies, which are basically composed of a metal or carbon-ceramic disc of adequate thickness that is solidly fixed to the wheel of the vehicle and coaxial with the latter's axis of rotation so that it can turn around said axis integral with the same wheel; a rigid support structure solidly fixed to the vehicle's suspension such that it is positioned astride the metal or carbon-ceramic disc without coming into direct contact with the latter; a pair of brake pads in a material with a high coefficient of sliding friction, traditionally known as "pads", which are located on the rigid support structure in symmetrical positions on opposite sides of disc so that each one faces a respective face of the disc close to the disc's external edge; and, lastly, a set of single-action hydraulic pistons that are placed between the rigid support structure and the two brake pads in order to push the two pads against the body of the disc so as to dissipate the vehicle's kinetic energy by friction, thus causing the vehicle to stop.

Since dissipation of the vehicle's kinetic energy by friction causes a rapid rise in the temperatures of the disc and the brake pads, and given that the temperatures reached by these components can exceed 900°C, in recent years the need has arisen to prevent the hydraulic pistons that push the pads against the disc from reaching temperatures that could cause the oil they contain to boil. This phenomenon would irreparably endanger correct operation of the brake assembly.

To avoid this risk, hydraulically operated brake assemblies have been presented during recent years that are equipped with two heat-insulating plates in composite materials, each of which is inserted between a pad of the brake assembly and the hydraulic piston(s) that push the same pad against the disc. More in detail, the two heat-insulating plates in composite materials are fixed on the rear faces of the two brake pads so that they are positioned between the same pads and the cylinder heads of the hydraulic pistons that push the pads against the disc, and each one of them is formed by one or more stacked layers of metal wires opportunely interwoven with glass fibres and/or carbon fibres and/or aramide fibres and embedded in an epoxy resin matrix. Unfortunately, experimental tests carried out on the new brake assemblies have not given the results hoped for: the current heat-insulating plates in composite materials cannot, in fact, completely insulate the hydraulic pistons from the heat generated by friction of the pads on the surface of the disc, and are limited to reducing the rate at which the oil contained inside the hydraulic pistons heats up and reaches boiling point.

In other words, if used for prolonged periods with particularly heavy braking, even the brake assemblies equipped with heat-insulating plates in composite materials cease to work after a brief period of time, because the oil in the hydraulic pistons cannot cool down sufficiently between successive braking manoeuvres and reaches its boiling point.

Further solutions, which attempted to solve the above problem, are directed to the use of insulating plates having a multi-layered structure which comprises two external layers in composite material formed by carbon fibres opportunely interwoven together and embedded in a polymer resin bonding matrix, and at least one compact central layer of silicate and, more specifically, of potassium aluminosilicate. More in detail, the two external layers of the heat-insulating plate are both formed by a carbon fibre mesh or fabric, preferably, but not necessarily, of the "TWILL" or "PLANE" type, while the bonding matrix of both the external layers consists of a high-temperature phenol-acrylic bonding resin.

Such a solution is for instance disclosed in WO-A-2009/04660.

This kind of configuration shows however many drawbacks. The first problem is given by the fact that the multi-layered structure constituted by materials having different nature and composition does not react uniformly to physical stress and therefore a detachment and disaggregation of the layers may occur, thus affecting the life-time of the plates.

A second, more relevant problem is characterised by the safety and the behaviour of the vehicles: due to the above-cited problems, the consumption of the multi-layered plates tend to delay the braking response, i.e. a fading effect on the brakes pedal may occur, what causes a misleading feeling to the driver by the evaluation of the braking distance. This effect is always increasing, proportionally to the plates consumption.

Finally, a third aspect is also constituted by the costs correlated to the production of a multi-layered structure and the need of its continuous substitution.

### DISCLOSURE OF THE INVENTION

The object of the present invention is that of providing heat-insulating plates for hydraulically or electro-hydraulically operated brake assembly, that can become immune from boiling risks for the oil contained in the hydraulic pistons that push the pads against the disc and which can solve the above-mentioned problems connected to the multi-layered structure. Therefore, according to the present invention, a heat-insulating plate for motor vehicles and similar is defined in claim 1. Further advantages are defined in the dependent claims.

A conventional brake assembly comprises a metal or carbon-ceramic disc of adequate thickness, which is suitable for being solidly fixed to the wheel of the vehicle or, alternatively, to the hub that supports the wheel of the vehicle, so that it is placed coaxially to the wheel's axis of rotation and so that it can turn around said axis integral with the same wheel. The brake assembly is also equipped with a pair of brake pads made in a material with a high coefficient of sliding friction, traditionally known as "pads", which are mounted in a movable manner on opposite sides of the disc in symmetrical positions with respect to each other, and a set of single-action hydraulic pistons that, when operated, are able to push the two pads against the body of the disc to make the two pads rub against its surface. According to the present invention, the brake assembly also comprises two heat-insulating components in the form of plates having a planar or any other possible shape depending on the specific needs, each of which is inserted between a respective pad and the hydraulic piston(s) that push said pad against the disc.

The single-layered structure constituting the object of the present invention results from the combination of a resin and a substrate, wherein the resin is:
(a) A thermoset resin chosen among the group constituted by phenolic resins, silicon resins or the combination of the two,
(b) The combination of one or both the resins of point (a) above with one or more resins chosen in the group comprising epoxy resins, polyester resins, melamine resins, vinylester resins or Bakelite,
(c) A thermoplastic resin chosen in the group constituted by plyimide, polyetheretherketone, polyetherketoneketone, polyphenylene sulphide, polyetherimide or a combination thereof
whilst the substrate is constituted by one or by the combination of the following alternatives:
- mica paper, muscovite mica paper, phlogopite mica paper or similar;
- fibers of glass, cotton or basalt in mat, cloth, compound or chop form.

The monolayer is obtained by injection or, in the case of thermoset resins according to items (a) and (b), by moulding techniques like SMC (sheet moulding compound) or similar, or by injection moulding techniques like BMC (bulk moulding compound) or similar, or by compression moulding with subsequent cut, so to obtain laminates of different form and structure which can be adapted to any condition and need.

According to one preferred embodiment, the heat-insulating monolayer is obtained by heat or cold compression moulding of thermoset or thermoplastic resins, with continuous pressure laminating technique, embossing of laminates or by pressure tank technique.

The thickness of the plate according to the present invention is comprised between 0.4 and 8 mm, the density is comprised between 1.4 and 2.4 g/cm³, preferably between 2 and 2.4 g/cm³, more preferably is 2.2 g/cm³, while the thermal conductivity is comprised between 0.1 and 0.5 W/mK, preferably between 0.15 and 0.25 W/mK, more preferably is 0.2 W/mK.

The particular structure of the heat-insulating plate offers an insulation which is definitely higher than in any other previous solution and therefore the oil life-time is greatly increased.

In other words, the heat-insulating plate is able to constantly keep the oil present inside the hydraulic pistons well below the boiling point, even when the temperature of the disc and the pads is higher than 1000°C.

The advantages offered by the above-described heat-insulating plates are evident: the brake assemblies made in this manner are able to support particularly severe conditions of use for extremely long periods without showing the slightest loss in efficiency. In particular, the plate according to the present invention has a consumption resistance which is much higher than the one shown by the solutions proposed in the state of the art: after 100.000Km of tests performed on different vehicles and in different weather and environmental conditions and from the results of computer simulations, the plate remains 100% intact. This corresponds also to a constant and uniform breaking behaviour, thus providing a high level of security and reliability to the driver.

According to an embodiment variant, the brake assembly can be equipped with a drum in substitution of the disc. Similarly to the disc, the drum is rigidly fixed to the hub that supports the wheel of the vehicle so that it is able to rotate integrally with the wheel around the wheel's axis of rotation.

In this case, the two brake pads both have a curved shape and are rigidly fixed so that they can be brought into contact with the internal cylindrical surface of the drum, while the heat-insulating plates, which have a curved shape as well, are inserted between the pads and two curved brake shoes on which the hydraulic pistons operate.

## Claims

1. Heat-insulating component for brake assembly in auto vehicles, motor vehicles and similar, having a mono-layered structure resulting from the combination of a resin and a substrate, wherein the resin is chosen among:
a. A thermoset resin chosen among the group constituted by phenolic resins, silicon resins or the combination of the two,
b. The combination of one or both the resins of a. with one or more resins chosen in the group comprising epoxy resins, polyester resins, melamine resins, vinylester resins or Bakelite, or
c. A thermoplastic resin chosen in the group constituted by polyimide, polyetheretherketone, polyetherketoneketone, polyphenylene sulphide, polyetherimide or a combination thereof,
and the substrate is constituted by one or by the combination of the following alternatives:
- mica paper, muscovite mica paper, phlogopite mica paper or similar;
- fibers of glass, cotton or basalt in mat, cloth, compound or chop form.

2. Heat-insulating component according to claim 1, **characterised in that** said component is formed by:
- compression moulding like SMC or similar
- injection for thermoplastic resins
- injection moulding like BMC or similar for thermoset resins
- embossing of laminates with subsequent cutting.

3. Heat-insulating component according to claim 1, **characterised in that** said component is formed by heat or cold compression moulding of thermoset or thermoplastic resins, with continuous pressure laminating technique, embossing of laminates or by pressure tank technique.

4. Heat-insulating component according to one of the preceding claims, **characterised in that** said component has a thickness comprised between 0.4 and 8 mm.

5. Heat-insulating component according to one of the preceding claims, **characterised in that** said component has the form of a flat or curved plate.

6. Heat-insulating component according to one of the preceding claims, **characterised in that** its density is comprised between 1.4 and 2.4 g/cm³, preferably between 2 and 2.4 g/cm³, more preferably is 2.2 g/cm³.

7. Heat-insulating component according to one of the preceding claims, **characterised in that** its thermal conductivity is comprised between 0.1 and 0.5 W/mK, preferably between 0.15 and 0.25 W/mK, more preferably is 0.2 W/mK.

8. Use of a heat-insulating component according to one of the preceding claims in a break assembly for auto vehicles, motor vehicles and similar, wherein said component is inserted between a breaking pad and one or more hydraulic piston that push said pad against a disc coupled to a vehicle wheel, where said disc rotates together with the wheel.

9. Use of a heat-insulating component according to one of claims 1 to 7 in a break assembly for auto vehicles, motor vehicles and similar, wherein said brake assembly is configures as a drum which is rigidly fixed to the hub that supports the wheel of the vehicle, so that it is able to rotate integrally with wheel around the wheel's axis of rotation, the two brake pads both have a curved shape and are rigidly fixed so that they can be brought into contact with the internal cylindrical surface of the drum, while the heat-insulating plates, which have a curved shape as well, are inserted between the pads and two curved brake shoes on which the hydraulic pistons operate.

## Patentansprüche

1. Wärmeisolierendes Bauteil für Bremsvorrichtungen in Kraftfahrzeugen, Motorfahrzeugen und Ähnlichem, welches einen einlagigen Aufbau aufweist, der sich aus der Kombination eines Kunstharzes und einer Unterlage ergibt, wobei dieses Kunstharz ausgewählt wird unter:
a) einem Duroplast, welcher aus der Gruppe ausgewählt wird, die aus Phenolharzen, Silikonharzen oder der Kombination aus diesen beiden gebildet wird,
b) der Kombination eines oder beider der unter a) genannten Kunstharze mit einem oder mehreren Kunstharzen, welche aus der Gruppe ausgewählt werden, die Epoxidharze, Polyesterharze, Melaminharze, Vinylesterharze oder Bakelit umfasst, oder
c) einem thermoplastischen Kunstharz, welches aus der Gruppe ausgewählt wird, die aus Polyimid, Polyetheretherketon, Polyetherketonketon, Polyphenylensulfid, Polyetherimid oder einer Kombination aus diesen besteht,
und wobei die Unterlage durch eine der folgenden Alternativen oder durch die Kombination der folgenden Alternativen gebildet wird:
- Glimmerpapier, Muskovitglimmerpapier, Phlogopitglimmerpapier oder Ähnlichem;
- Fasern aus Glas, Baumwolle oder Basalt in Form von Matten, Tuch, Verbundmaterial oder Häckselgut.

2. Wärmeisolierendes Bauteil nach Anspruch 1, **dadurch gekennzeichnet, dass** das genannte Bauteil gebildet wird durch:
- Formpressen wie beispielsweise SMC-Formmasse oder Ähnliches,
- Einspritzen für thermoplastische Kunstharze,
- Spritzgießen wie beispielsweise Bulk-Moulding-Compound oder Ähnliches für Duroplaste,
- Formstanzen von Laminaten mit nachfolgendem Schneiden.

3. Wärmeisolierendes Bauteil nach Anspruch 1, **dadurch gekennzeichnet, dass** das genannte Bauteil durch Warmformpressen oder Kaltformpressen von Duroplasten oder thermoplastischen Kunstharzen mit kontinuierlicher Drucklaminiertechnik, Stanzen von Laminaten oder durch Druckbehältertechnik geformt wird.

4. Wärmeisolierendes Bauteil nach einem der vorangehenden Ansprüche, **dadurch gekennzeichnet, dass** das genannte Bauteil eine Stärke zwischen 0,4 und 8 mm aufweist.

5. Wärmeisolierendes Bauteil nach einem der vorangehenden Ansprüche, **dadurch gekennzeichnet, dass** das genannte Bauteil die Gestalt einer ebenen oder gekrümmten Platte aufweist.

6. Wärmeisolierendes Bauteil nach einem der vorangehenden Ansprüche, **dadurch gekennzeichnet, dass** seine Dichte zwischen 1,4 und 2,4 g/cm³ und vorzugsweise zwischen 2 und 2,4 g/cm³ liegt, wobei 2,2 g/cm³ noch stärker vorzuziehen ist.

7. Wärmeisolierendes Bauteil nach irgend einem der vorangehenden Ansprüche, **dadurch gekennzeichnet, dass** seine Wärmeleitfähigkeit zwischen 0,1 und 0,5 W/m.K und vorzugsweise zwischen 0,15 und 0,25 W/m.K liegt, wobei 0,2 W/m.K noch stärker vorzuziehen ist.

8. Verwendung eines wärmeisolierenden Bauteils nach einem der vorangehenden Ansprüche in einer Bremsvorrichtung für Kraftfahrzeuge, Motorfahrzeuge und Ähnliches, wobei das genannte Bauteil zwischen einen Bremsbelag und einen oder mehrere Hydraulikkolben eingesetzt wird, welche den genannten Belag gegen eine Scheibe drücken, die an ein Fahrzeugrad angekoppelt ist, wo die genannte Scheibe sich zusammen mit dem Rad dreht.

9. Verwendung eines wärmeisolierenden Bauteils nach einem der Ansprüche 1 bis 7 in einer Bremsvorrichtung für Kraftfahrzeuge, Motorfahrzeuge und Ähnliches, wobei die genannte Bremsvorrichtung als Trommel ausgebildet ist, welche an der Nabe, die das Rad des Fahrzeugs trägt, starr befestigt ist, so dass sie imstande ist, sich zusammen mit dem Rad um die Drehachse des Rades zu drehen, wobei die beiden Bremsbeläge eine gekrümmte Gestalt aufweisen und dergestalt starr befestigt sind, dass sie mit der inneren Zylinderfläche der Trommel in Kontakt gebracht werden können, während die wärmeisolierenden Platten, welche ebenso eine gekrümmte Gestalt aufweisen, zwischen die Beläge und die zwei gekrümmten Bremsschuhe, auf welche die hydraulischen Kolben arbeiten, gebracht werden.

## Revendications

1. Composant calorifuge pour un ensemble de frein dans des véhicules automobiles et similaires, ayant une structure monocouche résultant de la combinaison d'une résine et d'un substrat, dans lequel la résine est choisie parmi :
a. une résine thermodurcissable choisie dans le groupe constitué de résines phénoliques, de résines de silicone ou la combinaison des deux,
b. la combinaison d'une ou des deux résines de a. avec une ou plusieurs résines choisies dans le groupe comprenant des résines époxy, des résines de poly(ester), des résines de mélamine, des résines de vinylester ou la bakélite, ou
c. une résine thermoplastique choisie dans le groupe constitué par du poly(imide), de la poly(étheréthercétone), de la poly(éthercétonecétone), du poly(sulfure de phénylène), du poly(étherimide) ou une combinaison de ces derniers,
et le substrat est constitué par une ou par la combinaison des alternatives suivantes :
- du papier de mica, du papier de mica muscovite, du papier de mica phlogopite ou similaire ;
- des fibres de verre, coton ou basalte sous forme de mat, de tissu, de composé ou coupée.

2. Composant calorifuge selon la revendication 1, **caractérisé en ce que** ledit composant est formé par
- moulage par compression tel qu'un préimprégné ou similaire
- injection pour les résines thermoplastiques
- moulage par injection tel qu'un prémélange ou similaire pour les résines thermodurcissables
- gaufrage de stratifiés avec coupage ultérieur.

3. Composant calorifuge selon la revendication 1, **caractérisé en ce que** ledit composant est formé par moulage par compression à chaud ou à froid de résines thermodurcissables ou thermoplastiques, avec une technique de stratification sous pression continue, de gaufrage de stratifiés ou par une technique de réservoir à pression.

4. Composant calorifuge selon l'une des revendications précédentes, **caractérisé en ce que** ledit composant a une épaisseur comprise entre 0,4 et 8 mm.

5. Composant calorifuge selon l'une des revendications précédentes, **caractérisé en ce que** ledit composant a la forme d'une plaque plate ou courbée.

6. Composant calorifuge selon l'une des revendications précédentes, **caractérisé en ce que** sa masse volumique est comprise entre 1,4 et 2,4 g/cm³, de préférence entre 2 et 2,4 g/cm³, de manière davantage préférée est de 2,2 g/cm³.

7. Composant calorifuge selon l'une des revendications précédentes, **caractérisé en ce que** sa conductivité thermique est comprise entre 0,1 et 0,5 W/mK, de préférence entre 0,15 et 0,25 W/mK , de manière davantage préférée est de 0,2 W/mK.

8. Utilisation d'un composant calorifuge selon l'une des revendications précédentes dans un ensemble de frein pour des véhicules automobiles, des véhicules à moteur et similaires, dans lequel ledit composant est inséré entre une plaquette de frein et un ou plusieurs pistons hydrauliques qui poussent ladite plaquette contre un disque couplé à une roue de véhicule, où ledit disque tourne conjointement avec la roue.

9. Utilisation d'un composant calorifuge selon l'une des revendications 1 à 7 dans un ensemble de frein pour des véhicules automobiles, des véhicules à moteur et similaires, dans lequel ledit ensemble de frein est configuré comme un tambour qui est rigidement fixé au moyeu qui supporte la roue du véhicule, de sorte qu'il est capable de tourner solidairement avec la roue autour de l'axe de rotation de la roue, les deux plaquettes de frein ayant toutes deux une forme courbée et étant rigidement fixées de sorte qu'elles peuvent être mises en contact avec la surface cylindrique interne du tambour, alors que les plaques calorifuges, qui ont également une forme courbée, sont insérées entre les plaquettes et les deux segments de frein que les pistons hydrauliques font fonctionner.
